# EUROPÄISCHE PATENTANMELDUNG

(11) **EP 0 993 998 A1**
(43) Veröffentlichungstag der Anmeldung: **19.04.2000**
(21) Anmeldenummer: 99115106.9
(22) Anmeldetag: 09.08.1999
(51) Int. Cl.: B60R 25/04

(54) **Verfahren und Einrichtung zur Generierung eines Diebstahlschutzsystemes für ein Kraftfahrzeug**

(30) Priorität: 17.09.1998 DE 19842648; 15.10.1998 DE 19847649
(71) Anmelder: Volkswagen Aktiengesellschaft, 38436 Wolfsburg (DE)
(72) Erfinder: Behn, Ernst-Dieter, 38477 Jembke (DE)

(57) **Zusammenfassung**

Die Erfindung betrifft ein Verfahren sowie eine Einrichtung zur Generierung eines Diebstahlschutzsystemes für ein Kraftfahrzeug, bei welchem bei Inbetriebnahme eines Fahrzeuges zwischen Zündschlüssel bzw. Zündschlüsseltransponder und einem Steuergerät ein Wechselcode generiert wird und vor Freigabe des Startvorganges ein Vergleich der generierten Wechselcodes vorgenommen wird. Um bei einem Verfahren sowie einer Einrichtung dieser Art die Sicherheit weiterhin zu erhöhen, ist erfindungsgemäß vorgeschlagen, daß zusätzlich zum aktuellen Wechselcodeabgleich ein Abgleich der Wechseleodes zumindest einer vorherigen legalen Inbetriebnahme zur Freigabe des Startvorganges vorgenommen wird.

## Beschreibung

Die Erfindung betrifft ein Verfahren sowie eine Einrichtung zur Generierung eines Diebstahlschutzsystemes für ein Kraftfahrzeug, bei welchem bei Inbetriebnahme des Fahrzeuges zwischen Zündschlüssel und einem Steuergerät ein Wechselcode generiert wird und vor Freigabe des Startvorganges ein Vergleich der generierten Wechselcodes vorgenommen wird, gemäß Oberbegriff der Patentansprüche 1 und 6.

Einrichtungen dieser Art sowie entsprechende Verfahrensweisen sind zum Diebstahlschutz von Kraftfahrzeugen eingesetzt. Im allgemeinen fallen sie unter den Begriff der sog. Wegfahrsperre, die für Neuwagen nicht zuletzt aus versicherungstechnischen Gründen vorgeschrieben ist.

Üblicherweise wird dabei eine Kommunikation zwischen einem zündschlüsselseitigen elektronischen Gerät und einem fahrzeugseitigen Steuergerät vorgenommen. Dabei tauschen bei entsprechend beabsichtigter Inbetriebnahme, also Einstecken des Zündschlüssels der besagte Zündschlüssel, d. h. seine Elektronik und die Elektronik des Steuergerätes einen Wechselcode aus. Eine entsprechende Kommunikation findet auch beim Außerbetriebnehmen des Fahrzeuges statt, bei welchem ggf. auch ein Wechselcode vereinbart wird, der bei erneutem Starten wiederum eine Rolle spielt.

Diebstahlschutzsysteme sind aus dem Stand der Technik bekannt, beispielsweise aus der DE 196 21 556 C1. Bei diesem Diebstahlschutzsystem werden über den Betriebsschlüssel Türen ver- und entriegelt und die Wegfahrsperre gelöst. Mit einem Systemschlüssel muß eine zusätzliche Freigabe hierzu spätestens vor Ende einer vorgegebenen Nutzungsdauer gegeben werden. Das Fahrzeug kann dann wieder während einer weiteren Nutzungsdauer ordnungsgemäß in Betrieb genommen werden. Betriebsschlüssel und Systemschlüssel sind unabhängig voneinander, wobei der Systemschlüssel nicht immer mitgeführt zu werden braucht. Ein solches System ist jedoch nicht für eine Wegfahrsperre zweckmäßig, welche bei jedem Abstellen des Fahrzeuges aktivierbar sein soll.

Aus der EP 0 645 286 ist ein Diebstahlschutz bekannt, bei welchem mehrere Steuergeräte zum Einsatz kommen. Darüber hinaus wird ein personenspezifischer Sensor, beispielsweise ein Fingerabdrucksensor eingesetzt, der verhindern soll, daß das Fahrzeug von unbefugten Personen bewegt werden kann. Nachteilig ist hierbei, daß Sensoren dieser Art, d. h. Sensoren, die personenspezifisch erkennen sollen, ebenso manipulierbar sind. Mittlerweile lassen sich Fingerabdrücke ebenso wie gewisse Körpermerkmale leicht fälschen. Ein entsprechender Aufwand könnte durchaus im Gegenwert des entsprechend entwendeten Fahrzeuges gerechtfertigt sein.

Aus der DE 195 29 666 C1 ist ein Verfahren zur Initialisierung eines Diebstahlschutzes für Kraftfahrzeuge bekannt. Hierbei werden für eine Wegfahrsperre mehrere tragbare Transponder und ein Steuergerät vorgesehen. Die besagten Transponder sind dabei mit dem Fahrzeugschlüssel fest verbunden und beinhalten die oben bereits beschriebene schlüsselzugewiesene Elektronik. Eine Vorgehensweise dieser Art kann problematisch bei der Verwendung mehrerer Fahrzeugschlüssel bei mehreren Personen sein. Es ist durchaus nicht unüblich, einer Mehrzahl von Personen die Benutzung eines Fahrzeuges zu gestatten und entsprechende Schlüssel vorzugeben. Eine wechselnde Initialisierung verschiedener Transponder kann jedoch zu Erkennungsproblemen und damit zu Fehlfunktionen führen. Und zwar dies, obwohl zwischen dem Zündschlüssel, also dem besagten Transponder und einem Steuergerät ein Wechselcode ausgetauscht bzw. generiert wird.

Der Erfindung liegt somit die Aufgabe zugrunde, die Sicherheit weiterhin zu erhöhen und eine Manipulierbarkeit nahezu vollständig auszuschließen.

Die gestellte Aufgabe wird bei einem Verfahren der gattungsgemäßen Art erfindungsgemäß durch die kennzeichnenden Merkmale des Patentanspruches 1 gelöst.

Hinsichtlich einer gattungsgemäßen Einrichtung ist die gestellte Aufgabe erfindungsgemäß durch die kennzeichnenden Merkmale des Patentanspruches 6 gelöst.

Weitere vorteilhafte Ausgestaltungen, sowohl des Verfahrens, als auch der erfindungsgemäßen Einrichtung sind in den übrigen abhängigen Ansprüchen angegeben.

Grundgedanke bei der Erfindung ist es, nicht wie bei der oben genannten DE 196 21 556 C1 außer dem Wechselcode noch die Anzahl der Startvorgänge abzufragen, sondern die jeweils generierten Wechselcodes der letzten Startvorgänge abzufragen.

Dies ist eine wesentliche Unterscheidung zu bisher bekannten Verfahrensweisen. Damit erhöht sich die Sicherheit des Systems enorm, weil eine Rückverfolgung der Wechselcodes der letzten beispielsweise acht erfolgreichen Startvorgänge bei unbefugtem Austausch einer der Komponenten unmöglich ist. Das heißt, das Gerät schließt sogar aus, daß ein Diebstahl möglich ist, selbst wenn der Dieb die Kontrollformel in der Kommunikation der einzelnen Geräte untereinander ermitteln kann. Er weiß dann immer noch nicht, welche Wechselcodes bei den letzten Startvorgängen vorgelegen haben. Das heißt, wenn der Dieb nur eine der Komponenten gegen eine andere austauscht, ist weiterhin ein Starten des Fahrzeuges nicht möglich.

Weiterhin vorteilhaft ist eine erfindungsgemäße Ausgestaltung des Verfahrens, die darin besteht, daß ein jeweils autarker Abgleich eines Wechselcodes sowohl zwischen Schlüssel und einem sog. Kombi-Steuergerät, als auch zwischen Kombi-Steuergerät und einem Motorsteuergerät vorgenommen wird.

Dabei ist es wiederum vorteilhaft sein, daß die Operanden und die Kontrollformeln zwischen Kombi-Steuergerät und Schlüssel bzw. Schlüsseltransponder und Kombi-Steuergerät und Motorsteuergerät verschieden sind. Der Vorteil hierbei ist, daß der Fahrzeugschlüssel zwar kopierbar ist, aber der Startvorgang dennoch nicht möglich ist.

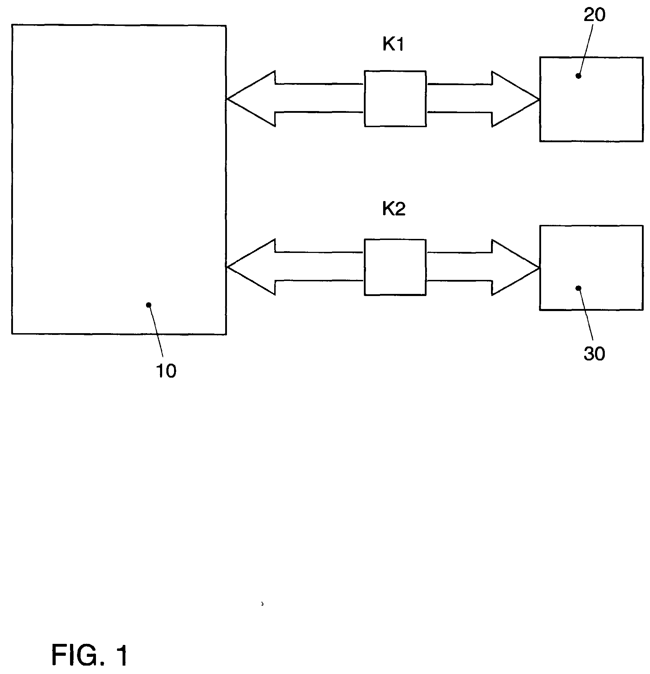

Die Erfindung ist schematisch in der Zeichnung dargestellt und nachfolgend auch im Hinblick auf die Reihenfolge der vorzunehmenden Maßnahmen noch näher dargestellt.

Die Abbildung zeigt die Verwendung eines sog. Kombi-Steuergerätes mit integriertem sogenannten Immo-Steuergerät.

Erfindungsgemäß kommuniziert das Kombi-Gerät 10 sowohl mit dem Schlüssel 20 bzw. mit dem besagten Transponder des Schlüssels, als auch mit dem Motorsteuergerät 30. Hierbei finden sog. Wechselcodegenerierungen zwischen den Geräten statt. Dabei wird wie folgt vorgegangen.

Zunächst wird der Schlüssel in das Zündschloß geschoben und in Zündrichtung betätigt. Mit dieser Betätigung "Zündung ein" wird das Kombi-Gerät mit Energie versorgt, also eingeschaltet. Sodann findet ein entweder in der einen oder anderen Richtung transferierter Tausch eines Festcodes zwischen Schlüssel und Kombi-Gerät statt. Ist dieser Festcode in Ordnung, so wird die zweite Phase des Ablaufes eingeleitet. Hierbei wird innerhalb des Kombi-Gerätes eine Zufallszahl RND generiert. Diese Zufallszahl wird über den Sendeweg K1 dem Schlüssel bzw. dem Transponder des Schlüssels mitgeteilt. Nun erfolgt eine autarke Berechnung des Wechselcodes sowohl im Kombi-Gerät, als auch im Schlüsseltransponder. Hier wird nach einer festgelegten, für beide Komponenten, also Kombi-Gerät und Schlüsseltransponder festgelegte Kontrollformeln der Code F(SKC-Kombi (RND)) und im Schlüsseltransponder F(SKC-Schlüssel (RND)) autark berechnet. Sodann sendet der Schlüsseltransponder den berechneten Wechselcode zum Kombi-Gerät zurück. Innerhalb des Kombi-Gerätes findet ein Abgleich der beiden Codes statt. Stimmen diese beiden überein, so wird die Motorsteuerung und damit die Zündung des Motors freigegeben. Bis dahin entspricht dies auch herkömmlichen Wechselcodeverfahren.

Hinzu kommt nun, daß auch eine Kommunikation zwischen Kombi-Gerät 10 und Motorsteuergerät 30 stattfindet. Auch hierbei wird zunächst ein Abgleich in Form eines Wechselcodes vorgenommen. Es findet also nicht nur ein Wechselcodeabgleich zwischen Kombi-Gerät 10 und Schlüsseltransponder 20 statt, nach oben genannter Kontrollformel, sondern es findet ebenso ein Abgleich zwischen Kombi-Steuergerät und Motorsteuergerät statt. Als nächstes teilt das Kombi-Steuergerät 10 dem Motorsteuergerät die Codes, d. h. die berechneten Kontrollformelzahlen der letzten, beispielsweise acht erfolgreichen Startvorgängen mit. Innerhalb des Motorsteuergerätes 30 findet dann ein Abgleich zwischen den Codes der letzten acht erfolgreichen Startvorgänge statt. Das heißt, wenn F(SKC-Kombi (1-8) (RND)) und F(SKC-Motorsteuerung (1-8) (RND)) gleich sind, dann erst erfolgt eine Freigabe an das Kombi-Steuergerät. Darüber hinaus wird der zuletzt für diesen aktuellen Startvorgang berechnete neue Kontrollwert bzw. Wechselcode als letzter Startvorgang gespeichert. Das heißt, bei beispielsweise acht Speicherplätzen werden die generierten Wechselcodes in Form einer elektronischen Schieberegisterablage abgespeichert.

Ist der besagte Endabgleich nicht in Ordnung, so wird ein Störsignal an die Motorsteuerung gemeldet, wodurch dann der Start blockiert wird. Vorteilhaft ist hierbei, daß ein Tausch des Motorsteuergerätes nicht möglich ist, nur mit kompletter Fahrzeugschlüsselcodierung, was im Diebstahlsfall erheblich zu aufwendig ist.

Des weiteren ist ein Tausch des Kombi-Gerätes mit Immo-Steuergerät nicht möglich, sondern lediglich nur mit kompletter Fahrzeugschlüsselcodierung. Bei Anpassung generiert sich für jedes Motorsteuergerät eine eigene Berechnungsformel, d. h. daß jedes Motorsteuergerät individuell ist. Das Kopieren des Fahrzeugschlüssels wird damit nutzlos. Des weiteren schützt eine solche Vorgehensweise auch die Schnittstelle zwischen Motorsteuergerät und Immo-Steuergerät bzw. Kombi-Gerät.

Die wesentliche und wirkungsvollste Unterscheidung zum Stand der Technik bzw. zu bekannten Verfahren dieser Art besteht darin, daß nicht nur die Nummer des jeweiligen Startvorganges, also demzufolge nur die Anzahl der bisherigen legalen Startvorgänge abgefragt bzw. abgeglichen wird, sondern daß die bei den letzten n-legalen Startvorgängen generierten Wechselcodes abgefragt bzw. abgeglichen werden. Diese Maßnahme ist gegenüber der im Stand der Technik geschilderten Maßnahme deutlich sicherer und macht damit den Diebstahl praktisch unmöglich.

## Patentansprüche

1. Verfahren zur Generierung eines Diebstahlschutzsystems für ein Kraftfahrzeuge, bei welchem bei Inbetriebnahme des Fahrzeuges zwischen Zündschlüssel und einem Steuergerät ein Wechselcode generiert wird und vor Freigabe des Startvorganges ein Vergleich der generierten Wechselcodes vorgenommen wird
**dadurch gekennzeichnet**,
daß zusätzlich zum aktuellen Wechselcodeabgleich ein Abgleich der Wechselcodes mindestens einer vorherigen legalen Inbetriebnahme zur Freigabe des Startvorganges vorgenommen wird.

2. Verfahren nach Anspruch 1,
**dadurch gekennzeichnet**,
daß ein jeweils autarker Abgleich eines Wechselcodes sowohl zwischen Schlüssel bzw. Schlüsseltransponder und Kombi-Steuergerät als auch zwischen Kombi-Steuergerät und einem Motorsteuergerät vorgenommen wird.

3. Verfahren nach Anspruch 2,
**dadurch gekennzeichnet**,
daß die Kontrollformel K1 für die Korrespondenz zwischen Kombi-Gerät und Schlüssel eine andere ist, als die Kontrollformel K2 für den Wechselcodeabgleich zwischen Kombi-Gerät und Motorsteuergerät.

4. Verfahren nach einem der vorhergehenden Ansprüche,
**dadurch gekennzeichnet**,
daß die bestimmte Anzahl von Wechselcodes von vorherigen legalen Inbetriebnahmen zusätzlich zum üblichen Wechselcodeabgleich zwischen Kombi-Gerät und Motorsteuergerät vorgenommen wird.

5. Verfahren nach einem der vorhergehenden Ansprüche,
**dadurch gekennzeichnet**,
daß die Wechselcodes der vorhergehenden legalen Inbetriebnahmen aktualisiert in einem schieberegisterähnlichen Speicher abgelegt werden.

6. Einrichtung zur Generierung eines Diebstahlschutzsystemes für ein Kraftfahrzeug, bei welchem bei Inbetriebnahme des Fahrzeuges zwischen Zündschlüssel bzw. Zündschlüsseltransponder und einem Steuergerät ein Wechselcode generiert wird und vor Freigabe des Startvorganges ein Vergleich der generierten Wechselcodes vorgenommen wird,
**dadurch gekennzeichnet**,
daß eine Kommunikationsstrecke zwischen Schlüssel (20) bzw. Schlüsseltransponder und Kombi-Gerät (10) und des weiteren ein Kommunikationspfad zwischen Kombi-Gerät (10) und Motorsteuergerät (30) realisiert wird, und daß Speichermedien zumindest im Kombi-Gerät (10) und in Motorsteuergerät (30) vorgesehen sind, in welchem mindestens der Wechselcode einer vorherigen legalen Inbetriebnahme abspeicherbar ist.

7. Einrichtung nach Anspruch 5,
**dadurch gekennzeichnet**,
daß die Kommunikationsstrecken bzw. Kommunikationspfade zwischen Kombi-Gerät (10) und Schlüssel (20) bzw. Schlüsseltransponder und Kombi-Gerät (10) und Motorsteuergerät (30) über eine Funkverbindung realisierbar ist.

8. Einrichtung nach Anspruch 5 oder 6,
**dadurch gekennzeichnet**,
daß die Kommunikationsstrecken bzw. Kommunikationspfade zwischen Kombi-Gerät (10) und Schlüssel (20) bzw. Schlüsseltransponder und Kombi-Gerät (10) und Motorsteuergerät (30) über eine optische Sende-/Empfangsverbindung realisierbar ist.

9. Einrichtung nach einem der Ansprüche 6-8,
**dadurch gekennzeichnet**,
daß die Speichermedien als schieberegisterähnliche Speicher ausgebildet sind.

10. Einrichtung nach Anspruch 9,
**dadurch gekennzeichnet**,
daß die Speicherplätze des schieberegisterähnlichen Speichers in dem Speicher einzeln verteilt sind.
